# EUROPEAN PATENT APPLICATION

(11) **EP 2 801 306 A2**
(43) Date of publication of application: **12.11.2014**
(21) Application number: 13179236.8
(22) Date of filing: 05.08.2013
(51) Int. Cl.: A47J 37/12

(54) **Induction heating fryer for suppressing scorching**

(30) Priority: 06.05.2013 KR 20130050777
(71) Applicant: Dipo Induction Co., Ltd., Hanam-si, Gyeonggi-do 465-120 (KR)
(72) Inventor: Kwon, Yong-Jai, 138-160 Seoul (KR)
(74) Representative: Finnie, Peter John

(57) **Abstract**

Disclosed is an induction heating fryer capable of suppressing scorching. The induction heating fryer includes: a container for receiving frying oil; an induction heater disposed outside the container and generating an electromagnetic field; a basket removably inserted into the container; and a heating plate disposed inside the container to be immersed in the frying oil and generating Joules heat through electromagnetic induction, wherein the container is provided with a non-magnetic window to enable electromagnetic induction of the induction heater and the heating plate.

## Description

### BACKGROUND

### 1. Technical Field

Embodiments of the invention relate to an induction heating fryer, and more particularly, to a scorch preventing induction heating fryer, which is configured to allow an electromagnetic field generated by coils to be transferred to an inner heating plate through a non-magnetic window or a clad portion.

### 2. Description of the Related Art

In general, an induction range based on induction heating has an energy efficiency of about 85%.

Thus, the induction range has considerably excellent heat efficiency, as compared with a gas range, a hi-light range, a hot plate, and the like, which have an energy efficiency of about 30% to 40%.

With advantages of substantially no fire hazard and no generation of toxic gas, induction ranges have been recognized as an eco-friendly and high-quality form of cookware and are increasingly distributed to restaurants, hotels, and the like.

However, since conventional induction ranges are configured to heat a cooking container through a heat source (coil) directly contacting the cooking container, scorching occurs on an adjacent surface of the cooking container contacting the coil.

Since scorches remaining on an outer periphery of the cooking container are not easily removed, it is difficult to wash the cooking container and peripheral electronic devices can be damaged by heat transferred to the cooking container.

As a related document, Korean Patent Publication No. 10-1998-028108A (published on July 15, 1998) discloses an induction heating fryer.

### BRIEF SUMMARY

It is one aspect of the present invention to provide an induction heating fryer, which allows an electromagnetic field generated by a coil to be transferred to a heating plate immersed in frying oil such that the heating plate directly heats the frying oil, thereby preventing an outer peripheral surface of a cooking container from being scorched.

It is another aspect of the present invention to provide an induction heating fryer, which can prevent heat of a heating plate from being transferred to peripheral electronic devices, thereby preventing damage to the electronic devices.

It is a further aspect of the present invention to provide an induction heating fryer, which allows a heating plate to be heated while being immersed in frying oil, whereby the frying oil can be promptly heated and can return back to a preset temperature when uncooked food is put into the oil.

In accordance with one aspect of the invention, an induction heating fryer capable of suppressing scorching includes: a container for receiving frying oil; an induction heater disposed outside the container and generating an electromagnetic field; a basket removably inserted into the container; and a heating plate disposed inside the container to be immersed in the frying oil and generating Joules heat through electromagnetic induction, wherein the container is provided with a non-magnetic window to enable electromagnetic induction of the induction heater and the heating plate.

Here, the non-magnetic window may be formed of heat resistant glass.

The non-magnetic window, the induction heater, and the heating plate may be formed at a same height to face each other.

The induction heater may surround the non-magnetic window.

The induction heater may include a body which receives the container and is provided on an outer surface thereof with a manipulating switch, and a coil disposed inside the body to surround the non-magnetic window and generating an electromagnetic field with electric power transferred from outside.

The heating plate may be attached to an outer surface of the basket.

The heating plate may be attached to a side surface of the basket to be separated from the basket by a support.

In accordance with another aspect of the present invention, an induction heating fryer capable of suppressing scorching includes: a container for receiving frying oil; an induction heater disposed outside the container and generating an electromagnetic field; a basket removably inserted into the container; and a heating plate disposed inside the container to be immersed in the frying oil and generating Joules heat through electromagnetic induction, wherein the container is provided with a clad portion to enable electromagnetic induction of the induction heater and the heating plate.

A portion of the clad portion facing the induction heater may have a triple-layer structure obtained by sequentially stacking stainless steel, aluminum, and stainless steel.

The clad portion, the induction heater, and the heating plate may be located at the same height to face each other.

The induction heater may surround the clad portion.

The induction heater may include a body which receives the container and is provided on an outer surface thereof with a manipulating switch, and a coil disposed inside the body to surround the non-magnetic window and generating an electromagnetic field from electric power transferred from outside.

The heating plate may be attached to an outer surface of the basket.

The heating plate may be attached to the side surfaces of the basket to be separated from the basket by the support.

### BRIEF DESCRIPTION OF THE DRAWINGS

The above and other aspects, features, and advantages of the invention will become apparent from the detailed description of the following embodiments in conjunction with the accompanying drawings, in which:
Fig. 1 is a front view of an induction heating fryer capable of suppressing scorching according to one embodiment of the present invention;
Fig. 2 is an enlarged view of a main part of the induction heating fryer of Fig. 1;
Fig. 3 is a perspective view of the induction heating fryer according to the embodiment of the present invention, in which heating plates are coupled to a basket;
Fig. 4 is a top view of the induction heating fryer shown in Fig. 3;
Fig. 5 is a perspective view of the induction heating fryer capable of suppressing scorching according to the embodiment of the present invention, in which heating plates are arranged in a band arrangement;
Fig. 6 is a top view of the induction heating fryer shown in Fig. 5; and
Fig. 7 is a front view of an induction heating fryer capable of suppressing scorching according to another embodiment of the present invention.

### DETAILED DESCRIPTION

Embodiments of the invention will now be described in detail with reference to the accompanying drawings.

It should be understood that the present invention is not limited to the following embodiments and may be embodied in different ways, and that the embodiments are given to provide complete disclosure of the invention and to provide a thorough understanding of the invention to those skilled in the art. The scope of the invention is defined only by the claims.

Descriptions of techniques known in the art will be omitted for clarity.

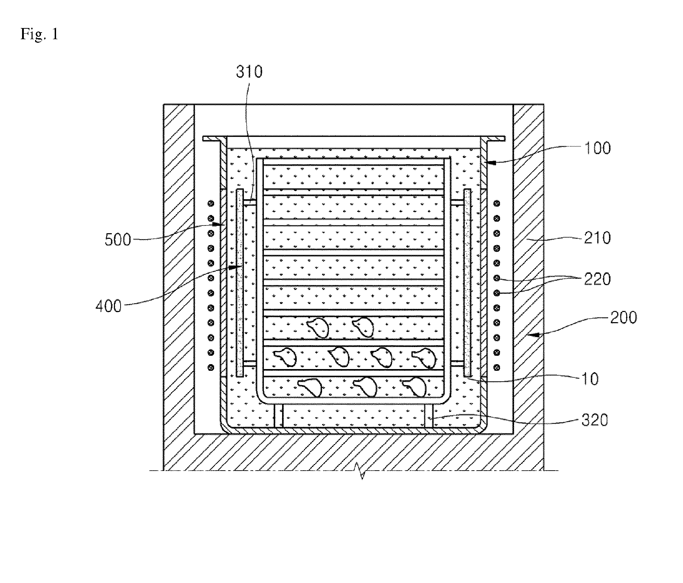

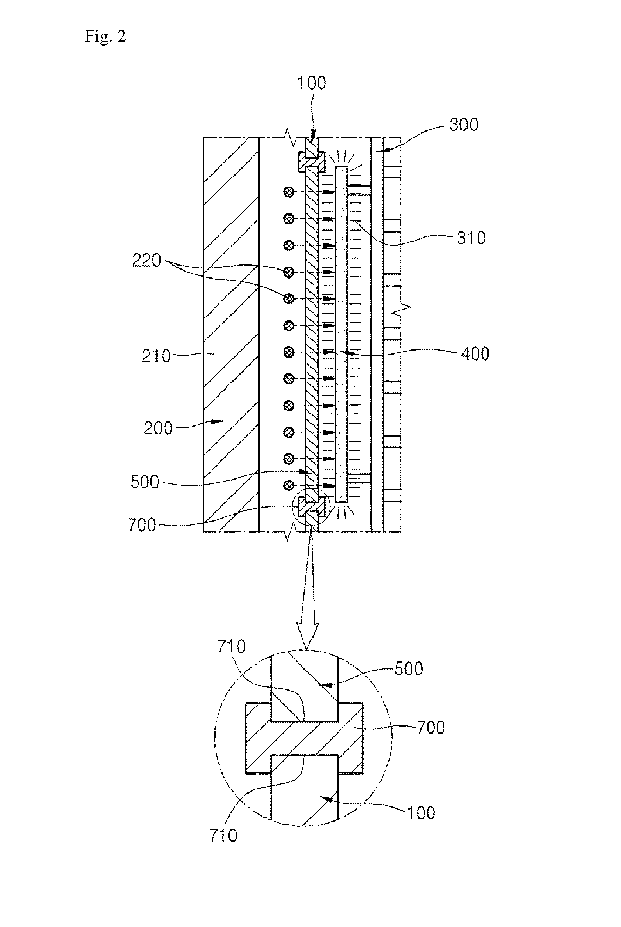

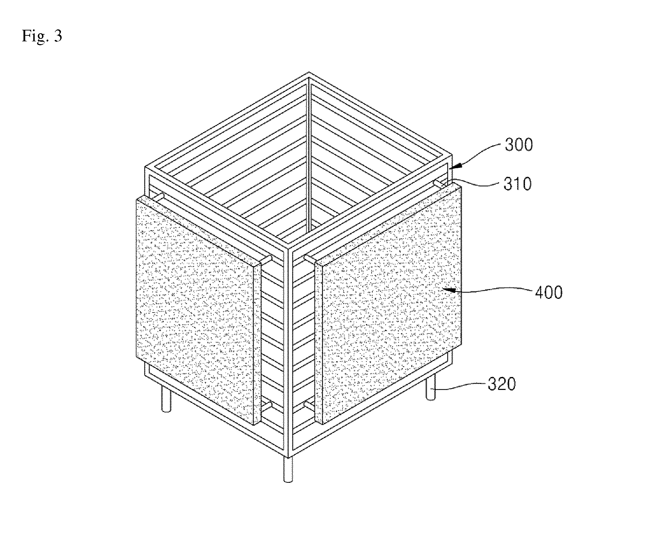

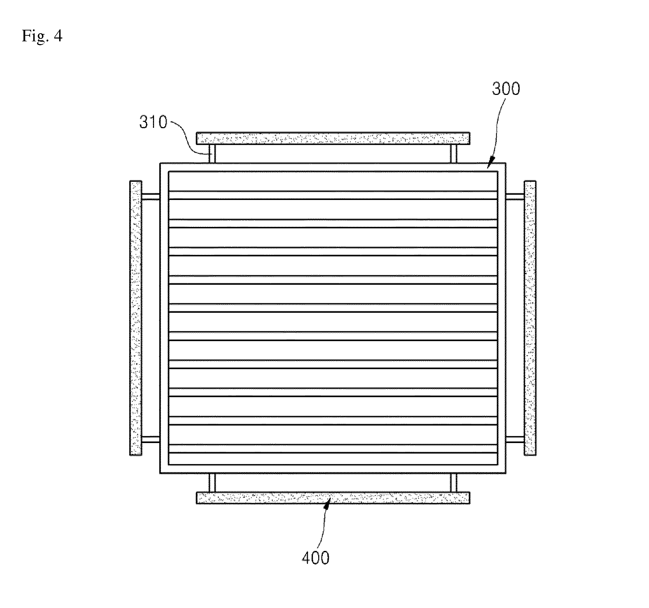

Fig. 1 is a front view of an induction heating fryer capable of suppressing scorching according to one embodiment of the present invention and Fig. 2 is an enlarged view of a main part of the induction heating fryer of Fig. 1. Fig. 3 is a perspective view showing a coupled state of a basket and heating plates of the induction heating fryer according to the embodiment of the present invention. Fig. 4 is a plan view of the induction heating fryer of Fig. 3.

Referring to Figs. 1 to 3, an induction heating fryer capable of suppressing scorching according to one embodiment includes a container 100, an induction heater 200, a basket 300, heating plates 400, and a non-magnetic window 500.

The container 100 defines a space open at an upper side thereof and receives frying oil 10 therein.

The basket 300, which will be described below, is coupled to the container 100 inside the container 100 and has a shape corresponding to a shape of the container 100.

The induction heater 200 transforms electrical energy into heat energy through electromagnetic induction.

The induction heater 200 applies an electromagnetic field (secondary electric current) to the heat the heating plates 400 to generate Joules heat such that the heating plates 400 can be heated thereby.

The induction heater 200 may include a body 210 and a coil 220.

The body 210 defines a space open at an upper side thereof such that the container 100 can be disposed therein.

Here, the body 210 may be provided at the upper side thereof with a cover (not shown) for opening or closing the space.

The body 210 may further include a separate locking member (not shown) for opening or closing the cover.

Further, the body 210 may be provided on an outer surface thereof with a manipulating switch (not shown) to allow a user to manipulate the induction heater 200.

The coil 220 may be formed of a metallic material having electrical conductivity, and is disposed inside the body 210 to surround the non-magnetic window 500.

Here, the coil 220 generates an electromagnetic field with electric power transferred from the outside and transfers the electromagnetic field to the heating plates 400 described below.

To this end, the coil 220 is disposed to surround side surfaces of the non-magnetic window 500 or a clad portion 600 described below.

A cable (not shown) for supplying electric power may be further connected to longitudinal ends of the coil 220 and a power plug may be provided to the cable.

In this way, the coil 220 applies the electromagnetic field to the heating plates 400 through the non-magnetic window 500, instead of directly heating the container.

When the electromagnetic field is applied to the heating plates 400 from the coil 220, the heating plates 400 heat the frying oil 10 without contacting an inner surface of the container 100.

Thus, since the coil 220 does not directly heat the container 100, an outer surface of the container is not scorched.

As clearly shown in Figs. 3 and 4, the basket 300 is disposed inside the container 100 and has the upwardly open space.

Here, the basket 300 may have a rectangular box shape in which plural metal bars are coupled to each other in a mesh shape.

The basket 300 is provided at an upper end thereof with a gripper such that a user can grip the basket.

Further, the basket 300 is provided with supports 310 protruding from the side surfaces thereof and securing the heating plates 400.

In addition, the basket 300 may be provided at a lower side thereof with separate supports 320 to separate the basket 300 a predetermined distance from a bottom surface of the container.

The heating plates 400 are integrally secured to an outer surface of the basket 300 to be immersed in the frying oil 10.

Here, the heating plates 400 are separated from the inner surface of the container 100 when immersed in the frying oil 10.

The heating plates 400 generate Joules heat through electromagnetic induction transferred from the induction heater 200.

The heating plates 400 attached to the outer surface of the basket 300 may individually heat the container 100.

Preferably, the heating plates 400 are attached to the side surfaces of the basket 300 to be separated from the basket 300 by the supports 310 protruding from the side surfaces of the basket 300.

The heating plates 400 may be formed of a material selected from among electric conductors such as metal and carbon, and semiconductors such as silicon, germanium, gallium arsenide (GaAs), fused silica, and the like.

It should be understood that the heating plates 400 may be made of other materials in addition to the aforementioned materials.

The non-magnetic window 500 is formed on a portion of the container 100 and enables electromagnetic induction of the induction heater 200 and the heating plates 400.

The non-magnetic window 500 may be formed of a transparent or translucent heat resistant glass.

Heat resistant glass refers to a glass material that can endure rapid heating and rapid cooling, has a low coefficient of thermal expansion and a lower softening point than general glass materials, and can endure rapid temperature change.

The non-magnetic window 500, the induction heater 200, and the heating plates 400 are located at the same height to face each other.

Further, the non-magnetic window 500 may be separately attached along a circumference of the container 100.

For example, when the container 100 has a rectangular box shape as shown in Fig. 4, four non-magnetic windows 500 may be provided to four sides of the container 100, respectively.

Alternatively, the non-magnetic window 500 may be disposed in a band shape to surround the container 100.

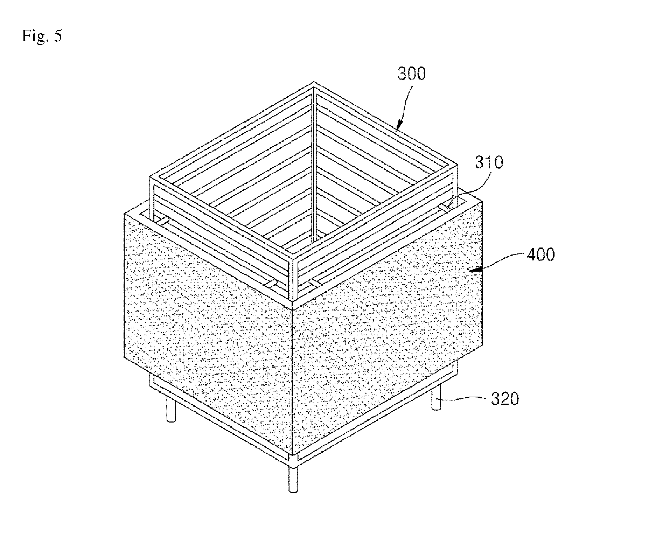

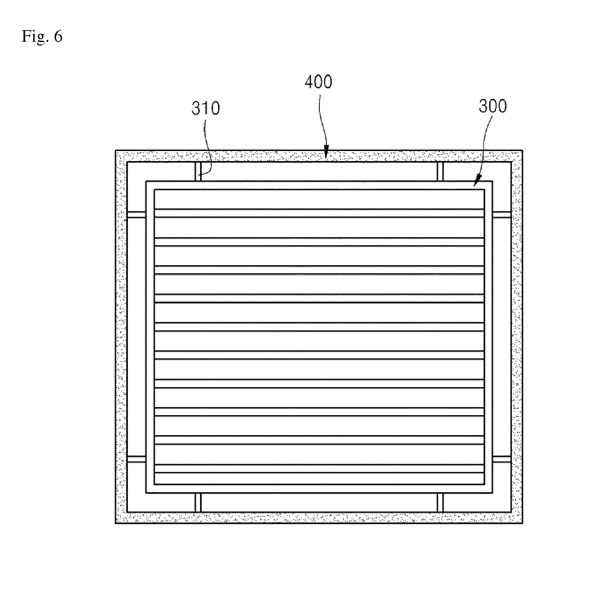

For example, when the container 100 has a rectangular box shape as shown in Figs. 5 and 6, the non-magnetic window 500 may be disposed in a rectangular band shape surrounding the container 100.

It should be understood that the shape of the non-magnetic window 500 may be changed according to the shape of the container 100.

That is, the electromagnetic field generated by the coil 220 of the induction heater 200 may be transferred to the heating plates 400 through the window 500.

Then, since the heating plates 400 heat the frying oil 10 without contacting the inner surface of the container 100, scorches are not generated on the outer surface of the container 100.

In addition, a gasket 700 may be disposed between the non-magnetic window 500 and the container 100 to prevent leakage of the frying oil.

As shown in Fig. 2, the gasket 700 is formed at inner and outer surfaces thereof with insertion grooves 710 into which the non-magnetic window 500 and the container 100 are inserted, respectively.

An induction heating fryer capable of suppressing scorching according to another embodiment of the invention will be described below.

Descriptions of the same components as those of the embodiment described above will not be repeated.

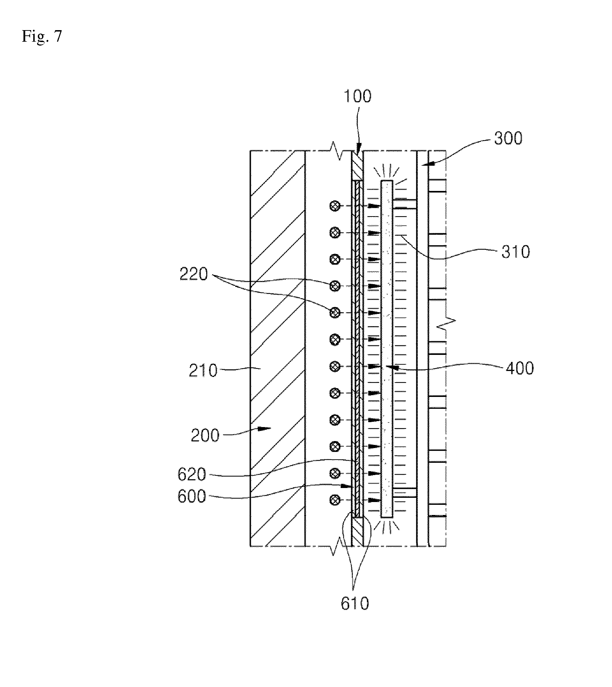

Fig. 7 is a front view of an induction heating fryer capable of suppressing scorching according to another embodiment of the present invention.

Referring to Fig. 7, an induction heating fryer capable of suppressing scorching according to another embodiment includes a container 100, an induction heater 200, a basket 300, heating plates 400, and a clad portion 600.

The clad portion 600 is formed on a portion of the container 100, and enables electromagnetic induction of the induction heater 200 and the heating plates 400.

Here, a portion of the clad portion 600 facing the induction heater 200 has a triple-layer structure obtained by sequentially stacking stainless steel 610, an aluminum material 620, and stainless steel 630.

Here, the clad portion 600 may be obtained by rolling the stainless steel 610, the aluminum material 620, and the stainless steel 610, which are stacked one above another, and may be mechanically attached to the container.

The clad portion 600, the induction heater 200, and the heating plates 400 are located at the same height to face each other.

In addition, when the container 100 has a rectangular box shape, four clad portions 600 may be provided to four sides of the container 100, respectively.

It should be understood that the clad portion may be formed in a band shape along the circumference of the container 100.

A coil 220 of the induction heater 200 is provided in a shape of surrounding the clad portion 600.

That is, an electromagnetic field generated by the coil 220 of the induction heater 200 is transferred to the heating plates 400 through the clad portion 600.

Then, the heating plates 400 heat frying oil 10 to a preset temperature without contacting the inner surface of the container 100.

Next, operation of the induction heating fryer capable of suppressing scorching according to the present invention will be described.

First, with the frying oil 10 contained in the container 100, electric power is supplied to the coil 220 of the induction heater 200.

Then, the coil 220 of the induction heater 200 applies an electromagnetic field to the heating plates 400 through the non-magnetic window 500 or the clad portion 600.

The heating plates 400 heat the frying oil 10 received in the container 100 to a preset temperature while generating Joules heat through transmission of the electromagnetic field.

Then, the basket 300 receiving non-cooked food is inserted into the container 100 heated to a preset temperature.

Of course, the basket 300 may be inserted into the container 100 before the interior of the container 100 is heated.

That is, since the coil 220 indirectly heats the non-magnetic window 500 or the clad portion 600 instead of directly heating the container 100, the outer surface of the container 100 is not scorched.

Since the heating plates 400 are placed inside the container 100 while contacting the frying oil 10, the frying oil 10 can be efficiently heated.

As a result, an electromagnetic field generated by the coils 220 is transferred to the heating plates 400 through the non-magnetic window 500 or the clad portion 600.

As such, since the coil 220 does not directly heat the container 100, the outer surface of the container 100 is not scorched.

In addition, since the heat on the heating plates 400 is not transferred to peripheral electronic devices, the devices can be prevented from being damaged by the heat.

Further, since the heating plates 400 are heated while being immersed in the frying oil 10, the frying oil 10 can be promptly heated and return to a preset temperature when non-cooked food is placed in the oil.

According to the present invention, the induction heating fryer allows an electromagnetic field generated by the coil to heat a heating plate immersed in oil, thereby preventing an outer periphery of a cooking container from being scorched when a portion of the outer periphery of the cooking container is used as the heating plate.

In addition, since the heating plate is immersed in frying oil, heat of the heating plate is not transferred to peripheral devices to prevent the devices from being damaged by the heat, thereby extending the lifespan of the devices.

Further, since the heating plate is heated while being immersed in frying oil, the frying oil can be promptly heated and can return to a preset temperature when uncooked food is immersed in the oil.

Although some exemplary embodiments have been described above, it will be apparent that various changes and modifications can be made without departing from the scope of the present invention.

Although some exemplary embodiments have been described herein, it should be understood by those skilled in the art that these embodiments are given by way of illustration only, and that various modifications, variations and alterations can be made without departing from the spirit and scope of the present invention. Therefore, the scope of the present invention should be limited only by the accompanying claims and equivalents thereof.

## Claims

1. An induction heating fryer capable of suppressing scorching, comprising:
a container for receiving frying oil;
an induction heater disposed outside the container and generating an electromagnetic field;
a basket removably inserted into the container; and
a heating plate disposed inside the container to be immersed in the frying oil and generating Joules heat through electromagnetic induction,
wherein the container is provided with a non-magnetic window facing the induction heater and the heating plate.

2. The induction heating fryer according to claim 1, wherein the non-magnetic window is formed of heat resistant glass.

3. The induction heating fryer according to claim 1, wherein the non-magnetic window, the induction heater, and the heating plate face each other.

4. The induction heating fryer according to claim 1, wherein the heating plate is attached to an outer surface of the basket.

5. The induction heating fryer according to claim 4, wherein the heating plate is attached to a side surface of the basket to be separated from the basket by a support.

6. An induction heating fryer capable of suppressing scorching, comprising:
a container for receiving frying oil;
an induction heater disposed outside of the container and generating an electromagnetic field;
a basket removably inserted into the container; and
a heating plate disposed inside the container to be immersed in the frying oil and generating Joules heat through electromagnetic induction,
wherein the container is provided with a clad portion facing the induction heater and the heating plate in the container.

7. The induction heating fryer according to claim 6, wherein the clad portion has a triple-layer structure obtained by sequentially stacking stainless steel, aluminum, and stainless steel materials.

8. The induction heating fryer according to claim 6, wherein the clad portion, the induction heater, and the heating plate are located at the same height to face each other.

9. The induction heating fryer according to claim 6, wherein the heating plate is attached to an outer surface of the basket.

10. The induction heating fryer according to claim 9, wherein the heating plate is attached to a side surface of the basket to be separated from the basket by the support.
